# EUROPEAN PATENT SPECIFICATION

(11) **EP 3 131 804 B1**
(45) Date of publication and mention of the grant of the patent: **22.01.2020**
(21) Application number: 15717773.4
(22) Date of filing: 09.04.2015
(51) Int. Cl.: B61L 27/00, B61L 15/00, G06F 11/16, G06F 11/14

(54) **RAILWAY SAFETY CRITICAL SYSTEMS WITH TASK REDUNDANCY AND ASYMMETRIC COMMUNICATIONS CAPABILITY**
SICHERHEITSKRITISCHE EISENBAHNSYSTEME MIT AUFGABENREDUNDANZ UND ASYMMETRISCHER KOMMUNIKATIONSFÄHIGKEIT
SYSTÈMES CRITIQUES DE SÉCURITÉ FERROVIAIRE AVEC REDONDANCE DE TÂCHE ET CAPACITÉ DE COMMUNICATION ASYMÉTRIQUE

(30) Priority: 16.04.2014 US 201414254332
(43) Date of publication of application: 22.02.2017
(73) Proprietor: Siemens Mobility, Inc., New York, NY 10018 (US)
(72) Inventor: WEBER, Claus, 38176 Wendeburg (DE); EGEL, Zoltan, New York, New York 10128 (US)
(74) Representative: Isarpatent
(86) International application number: PCT/US2015/025022
(87) International publication number: WO 2015/160603

(56) References cited:
- US-A1- 2011 208 997
- US-A1- 2014 074 327

## Description

### BACKGROUND OF THE DISCLOSURE

### 1. Field of the Invention

The invention relates to railway control safety critical systems. More particularly, the present invention relates to control systems in railway safety critical application systems with low hazard rates, as is needed in the railway industry. Railway safety critical application systems ("safety critical systems") include by way of non-limiting example train management systems, back office server, onboard units for automatic intervention if a train exceeds safeguarded speed limits, data recorders that record operational information, train speed and position determination equipment, brake and throttle control, sub-system status and diagnostics, wireless data communications exchanged between trackside/landside and train side (e.g., via wireless radio communications) and train crew communications. As used herein, the term "train" is a locomotive alone, locomotive with cars, or an integrated locomotive/car vehicle, (e.g., light rail or subway).

### 2. Description of the Prior Art

Railway trains are equipped with safety critical systems that are required to have high availability and low hazard rates (a "hazard" is commonly understood as "physical situation with a potential for human injury and/or damage to environment" (IEC 62278)). "Railway operators and governmental regulators often require exceedingly low hazard rates that satisfy their high demand for operational safety."). Safety critical systems are typically operated with electronic control systems. Over time those systems are gravitating to processor or controller operated digital electronic systems that communicate with each other over one or more communications data buses.

In order to meet railway safety objectives, control system hardware is often of proprietary dedicated design with documented testing and validation. Digital electronic controller operating systems and application software are also validated. Electronic data communications utilize validated security codes for data integrity checks, such as hash codes or cryptographic attachments, in order to assure data integrity upon transmission between the systems. Validation processes require time and expense. Given the relatively limited demand and sales volume of railway safety critical systems, as compared to demand for general commercial and consumer electronics (e.g., personal computer hardware, software and operating systems), the railway safety critical systems controllers and related equipment are expensive to manufacture and have longer product lifecycles than those sold in the general electronics applications fields.

However, consumer and commercial personal computers (PC's) cannot be directly substituted for existing railway safety critical systems control systems. PC's are often only having a data failure rate of no more than 10⁻⁴ per operational hour, which is insufficient to meet railway systems required hazard. Additionally, PC commercial operating system software is not validated for use in railway safety critical systems.

There is a need in the railway industry to replace railway-domain specific proprietary design safety critical system control system hardware and operating system software with more readily available general purpose commercial off the shelf ("COTS") products, where feasible. Substitution of COTS subsystems for railway-domain specific proprietary design subsystems potentially can simplify overall system design, shorten system design cycles, and allow the railway safety critical system prime supplier to focus its efforts on overall system application and integration issues, where it has greater expertise than general consumer or COTS electronics sub-vendors.

There is also a need in the railway industry to reduce safety critical system control system procurement costs and increase the number of qualified sub-vendors by substituting COTS products for railway-domain specific products, when validation of the substitutes is cost effective. The railway customer and safety critical system prime supplier may also benefit from outsourcing design and manufacture of subsystem components to sub-vendors whom may have broader design expertise for their respective commercial components.

There is an additional need in the railway industry to streamline safety critical system procurement timelines by simplifying and aggregating validation procedures. For example, if commercial off-the-shelf (COTS) control system hardware and software components already meet recognized and documented reliability validation standards; there may be no need to revalidate those same products for railway critical system applications. Rather, the safety critical system validation may be consolidated and simplified by a general system validation process that includes contributions of already validated commercial off-the-shelf products, thereby streamlining procurement timelines and processes. US 2014/074327 A1 describes a railway vital or critical application system using a pair of personal computers and operating systems with asymmetric communications capability. Each computer and operating system may differ for additional redundancy. Both computers receive and verify vital systems input message data and security code integrity and separately generate output data responsive to the input message

### SUMMARY OF THE INVENTION

Accordingly, an object of the present invention is to simplify railway safety critical systems overall design by replacing proprietary design safety critical system control system hardware and operating system software with more readily available non-proprietary commercial products.

It is also an object of the present invention to reduce safety critical system control system procurement costs and increase the number of qualified sub-vendors whom may have broader design expertise in their respective commercial product lines by substituting non-proprietary products for proprietary products when validation for the substitutes is cost effective.

An additional object of the present invention is to streamline safety critical system control system procurement costs and validation timelines, as well as increase the number of qualified vendors by simplifying and aggregating validation procedures.

These and other objects are achieved in accordance with the present invention by a control system for a railway safety critical application system ("safety critical system") and method for operating that control system that substitutes commercial off-the-shelf hardware and operating system software for railway-domain specific proprietary product components, yet can be validated as in conformance with railway safety critical system standards. For example, a commercial personal computer or a virtual computer environment with one or more personal computers and operating systems may be substituted for proprietary railway-domain specific railway environment with two independent tasks, threads or nodes, and are configured for asymmetrical communication with other safety critical systems. Both tasks receive and verify safety critical systems input message data and security code integrity and separately generate output data responsive to the input message. With an asymmetrical communication architecture, the first task has sole capability to send safety critical system output messages including the output data but without output security code, and only the second task has the capability of generating the needed output security code. Due to redundancy and asymmetrical communications architecture, a failure of either or both tasks, software or processing capability results in failure to transmit a safety critical system output message or an output message that cannot be verified (and thus not used or trusted) by other safety critical systems that receive those unverified messages.

The present invention features a control system for a railway safety critical application system ("safety critical system"). The control system has at least one controller, which comprises a computer processor and is configured to execute first and second tasks. The first task is capable of being in bilateral communication with the second task and is capable of sending and receiving a safety critical systems message within a railway safety critical application system. That message includes a security code and safety critical data. The second task is capable of being in bilateral communication with the first task and is capable of receiving but incapable of sending the safety critical systems message to the railway safety critical application system. The second task has a security code generator. The control system has an inter- task communications pathway coupling the first and second task. The first and second tasks are configured to receive a common input safety critical systems message including input safety critical systems data and an input security code. They both are configured to independently verify the input message integrity and independently generate output safety critical systems data. The second task is configured to generate an output security code and sends it to the first task. The first task is configured to assemble and send an output safety critical systems message including the output safety critical systems data and the second task's output security code for use within the safety critical application system. The computer processor is configured to execute said first task and said second task simultaneously, virtually and in real time in said computer processor.

The present invention also features a railway system comprising a plurality of control systems according to the invention.

The present invention additionally features a method for controlling safety critical railway control systems (such as interlocking systems or train control systems). The method comprises receiving with respective first and second tasks that are executed on at least one controller, which comprises a computer processor, a safety critical systems input message that is generated within a railway safety critical application system that includes a security code and safety critical data, and independently verifying the input message integrity. Next each of the tasks independently generates output safety critical systems data in response to the input message. The second task generates an output security code that is sent to the first task, which is in turn then responsible for assembling and sending an output safety critical systems message including the output safety critical systems data and the second task's output security code. Said first task and said second task are being executed simultaneously, virtually and in real time on the computer processor.

The objects and features of the present invention may be applied jointly or severally in any combination or sub-combination by those skilled in the art.

### BRIEF DESCRIPTION OF THE DRAWINGS

The teachings of the present invention can be readily understood by considering the following detailed description in conjunction with the accompanying drawings, in which:
FIG. 1 is an onboard train control system general schematic drawing showing interaction of train safety critical systems of the present invention;
FIG. 2 is a schematic of a computer or controller of the type used in train safety critical system control systems of the present invention;
FIG. 3 is an exemplary safety critical systems message format used in the safety critical system control systems of the present invention;
FIG. 4 is a block diagram showing communications interaction among the safety critical system control systems of the present invention;
FIG. 5 is a timing diagram showing processing steps performed by an exemplary embodiment of the safety critical system control systems of the present invention; and
FIG. 6 is a timing diagram showing processing steps performed by another exemplary embodiment of the safety critical system control systems of the present invention.

To facilitate understanding, identical reference numerals have been used, where possible, to designate identical elements that are common to the figures.

### DETAILED DESCRIPTION

After considering the following description, those skilled in the art will clearly realize that the teachings of the present invention can be readily utilized in a railway safety critical system that substitutes commercial hardware and/or operating system software for proprietary product components, yet is validated to conform with railway safety critical system standards. In some embodiments of the present invention the safety critical system utilizes a virtual computer environment with one or more personal computers, with two independent tasks and operating systems, or other commercially available controllers and operating systems. Each computer, operating system, software language and compliler may differ for additional diversity. Both tasks receive and verify safety critical systems input message data and security code integrity and separately generate output data responsive to the input message. The separate paired tasks communicate asymmetrically. The first task has sole capability to send safety critical system output messages, including the output data and an output security code, but only the second task has the capability of generating the output security code. A failure of either computer hardware, software or processing capability results failure to transmit a safety critical system output message or transmits an output message that cannot be verified (and thus not used or trusted) by other safety critical systems that receive those unverified messages.

### General Description of Train Safety Critical Systems

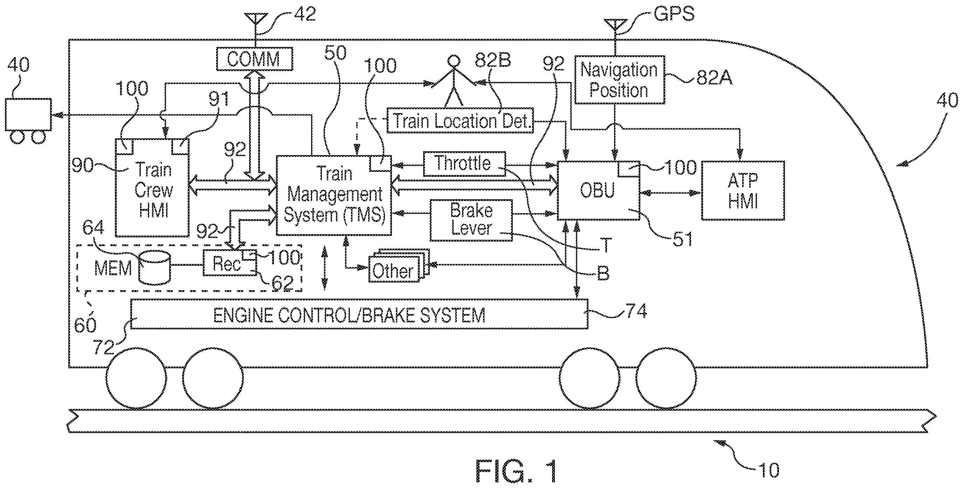

FIG. 1 shows generally a railway system with fixed tracks 10 and one or more trains 40. The general description herein concerning train communications, interactions of train systems including safety critical systems or the like, is of a general nature to assist in understanding how the present invention may be utilized in a railway train. Individual train networks and train systems may vary from the general exemplary description set forth herein. The train 40 includes a wireless data/communications system 42 that is capable of transmitting and receiving wireless data, which is in communication with the communications system wireless track-train-control station network (not shown).

The train transmitter and receiver communications safety critical system 42 is communicatively coupled directly or indirectly to other safety critical systems, including the onboard train management system (TMS) 50 and an onboard unit (OBU) 51 that intervenes in train speed control and braking in the event that the train operator fails to follow local track speed and stopping mandates. Typically the train 40 also has an onboard data recording system (DRS) 60 of known design, with a recorder 62 and one or more associated memory storage devices 64, for among other things acquiring, processing, organizing, formatting and recording incident data. As with any other safety critical system, the DRS 60 function may be incorporated as a subsystem within another train onboard vital system, such as the train management system (TMS) 50, rather than as a separate stand-alone device.

As also shown in FIG. 1, train 40 generally has other safety critical subsystems, including drive system 72 that provides driving force to one or more wheel carriages, and brake system 74 for altering train speed. The on-board train management system (TMS) 50 is the principal electronic control device for all other controlled train subsystems, including the navigation position system (NPS) 82A with associated train location detection system 82B that provides train position and speed information. Other subsystems include throttle control that causes the drive system 72 (e.g., more or less throttled speed) and receives commands from the TMS 50. The brake system 74 causes the brakes to brake the train 40. The brake system 74 also receives commands from the TMS 50. Other train cars and/or tandem locomotives 40' optionally may be in communication with the TMS 50 or other subsystems in train 40, such as for coordination of braking and throttle control. The train 40 also has a train crew human-machine interface (HMI) 90 that has an electronic display screen 91 and operator actuated brake B and throttle T controls (one or both of which are used by the operator depending upon the train operating conditions), so that the train operator can drive the train. The HMI 90 communicates with the TMS 50 via communications data bus 92, though other known communications pathways can be substituted for the data bus when implementing other known control system architectures. The HMI 90 communicates train operator respective throttle T and brake B control commands to the respective engine control 72 and the brake system 74.

In this exemplary embodiment of FIG. 1, each of the TMS train control system 50, the OBU 51, the data recording system (DRS) 60 and the HMI 90 have internal computer/controller platforms 100 of known design that communicates with each other via data bus 92. However the number of computer controllers, their location and their distributed functions may be altered as a matter of design choice. In this exemplary embodiment, general control of train 40 subsystems is performed by TMS 50 and the controller platform 100 therein; the intervention functions are performed by the OBU 51 and the controller platform 100 therein; the data recording functions are performed by the data recording system 60 and the controller platform 100 therein; and the HMI functions are performed by HMI 90 and the controller platform 100 therein, though any of these systems 50, 51, 60, 90 may be combined in part or in whole.

### General Description of Safety Critical Railway Systems tasks and their Communication

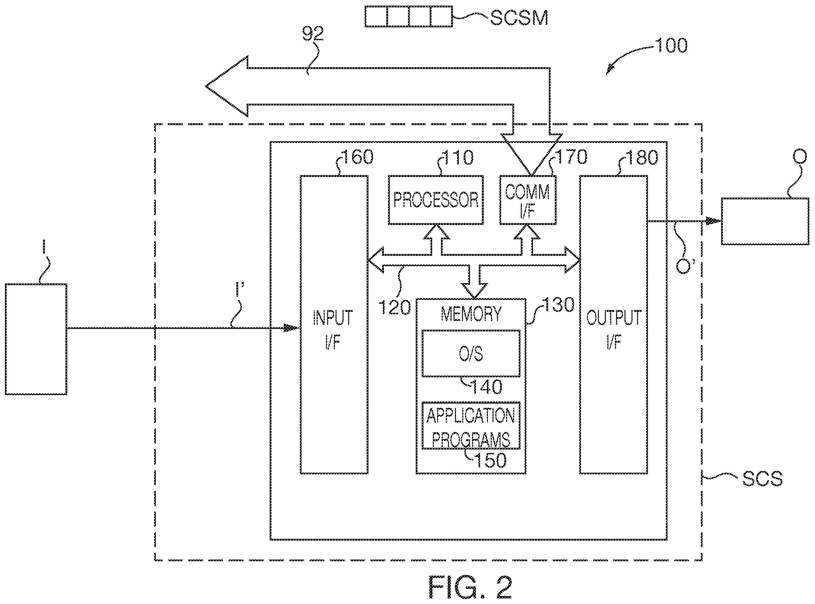

Referring to FIG. 2, a physical or virtual controller platform 100 includes a processor 110 and a controller bus 120 in communication therewith. Processor 110 is coupled to one or more internal or external memory devices 130 that include therein operating system 140 and application program 150 software module instruction sets that are accessed and executed by the processor, and cause its respective control device (e.g., TMS 50, OBU 51, DRS 60 or HMI 90, etc.) to perform control operations over their respective associated safety critical subsystems.

While reference to an exemplary controller platform 100 architecture and implementation by software modules executed by the processor 110, it is also to be understood that the present invention may be implemented in various forms of hardware, software, firmware, special purpose processors, or a combination thereof. Preferably, aspects of the present invention are implemented in software as a program tangibly embodied on a program storage device. The program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform 100 also includes an operating system and microinstruction code. The various processes and functions described herein may be either part of the microinstruction code or part of the program (or combination thereof) which is executed via the operating system. In addition, various other peripheral devices may be connected to the computer/controller platform 100.

It is to be understood that, because some of the constituent system components and method steps depicted in the accompanying figures are preferably implemented in software, the actual connections between the system components (or the process steps) may differ depending upon the manner in which the present invention is programmed. Specifically, any of the computer platforms or devices may be interconnected using any existing or later-discovered networking technology and may also all be connected through a larger network system, such as a corporate network, metropolitan network or a global network, such as the Internet.

Computer/controller platform 100 receives input communications from one or more input devices I via respective communications pathways I' through input interface 160, that in turn can distribute the input information via the controller bus 120. Output interface 180 facilitates communication with one or more output devices O via associated communications pathways O'. The controller platform 100 also has a communications interface 170 for communication with other controllers on a shared external data bus, such as the data bus 92 that was previously described.

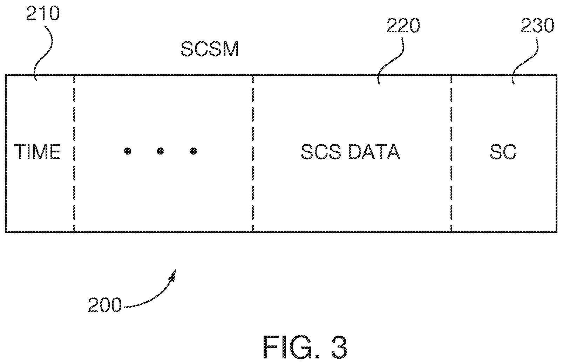

Referring go FIGs. 2-4, communications among computer/controller platforms 100 and their respective safety critical systems (SCS1-SCSn) are accomplished via a safety critical systems message (SCSM) 200 carried on data bus 92. Each SCSM 200 is formatted and transmitted in accordance with a known protocol that is approved for safety critical data integrity in railway critical systems, including a known security code generated by known CHECK-SUM, HASH, etc. protocols. The exemplary SCSM 200 shown in FIG. 3 includes a time stamp 210, and if required a sequence number and source and destination identifiers (not shown), safety critical system data (SCS data) 220 and a security code (SC) 230. For ease of description herein, an incoming or input safety critical systems message (SCSMI) comprises safety critical input data (DI) and an input security code (SI). Similarly, an outgoing or output safety critical systems message (SCSMO) comprises safety critical output data (DO) and an output security code (SO). When a safety critical system SCS1-SCSn receives a SCSMI its data integrity is verified with a known SCI 240 analysis module within the tasks (T1, T2). If the SCSMI data integrity is verified the DI are utilized by the tasks to prepare a responsive output message SCSMO including output data DO and an output security code generated in SCO 250 generation module. As with the SCI 240 module the SCO 250 module generation function is implemented in hardware, firmware, software or any combination thereof. The subsequently generated SCSMO is communicated to one or more intended recipient SCS controller platforms that in turn treat the message as a SCSMI.

### Redundant Control System and Operation

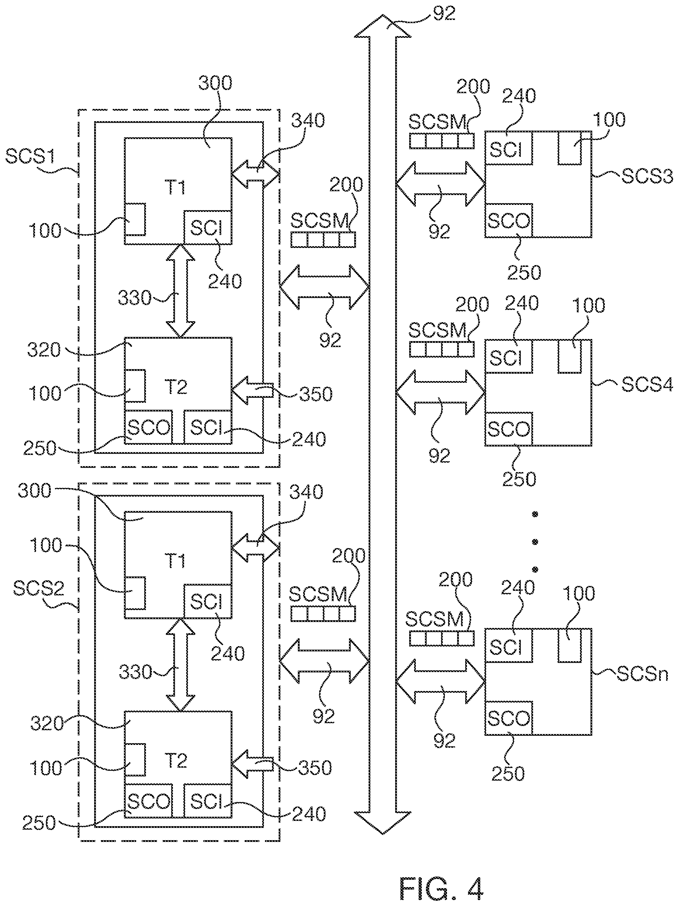

In FIG. 4 the safety critical system tasks SCS1 and SCS2 respectively comprise a paired set of tasks T1 300 and T2 320 that are in bilateral communication with each other via inter-controller data interface 330. The tasks 300, 320 are running in commercially available industrial, commercial or consumer devices, such as for example industrial programmable logic controllers, separate or unitized computer/controller motherboards, or commercial off-the-shelf personal computers/motherboards. The tasks 300, 320 are executed virtually in a computer processor. The separate tasks T1 and T2, are both are executed simultaneously, virtually and in real time, in a common computer processor 100, with the respective SCI 240 and SCO 250 sub-tasks also implemented virtually.

The T1 task 300 is capable of bilateral communication with the critical system data bus 92 through communications pathway 340, which may comprise a communications port enabled in the task platform 100 communications interface 170. Task 300 has an incoming security code verification module 240 that enables it to verify data integrity of a SCSMI, but it does not have the capability of generating an outgoing SCSMO security code SCO.

The T2 task 320 has an enabled outgoing security code SCO generator 250, but is incapable of transmitting an SCO and critical output data directly to the critical system data interface 92. Task 320 is only able to transmit the SCO to task 300 via the internal data interface 330: it is only capable of receiving a SCSMI through unilateral, incoming communications pathway 350 and can verify data integrity with SCI verification module 240. In other words, the T2 task 320 is incapable of transmitting directly SCSMO to the data bus 92.

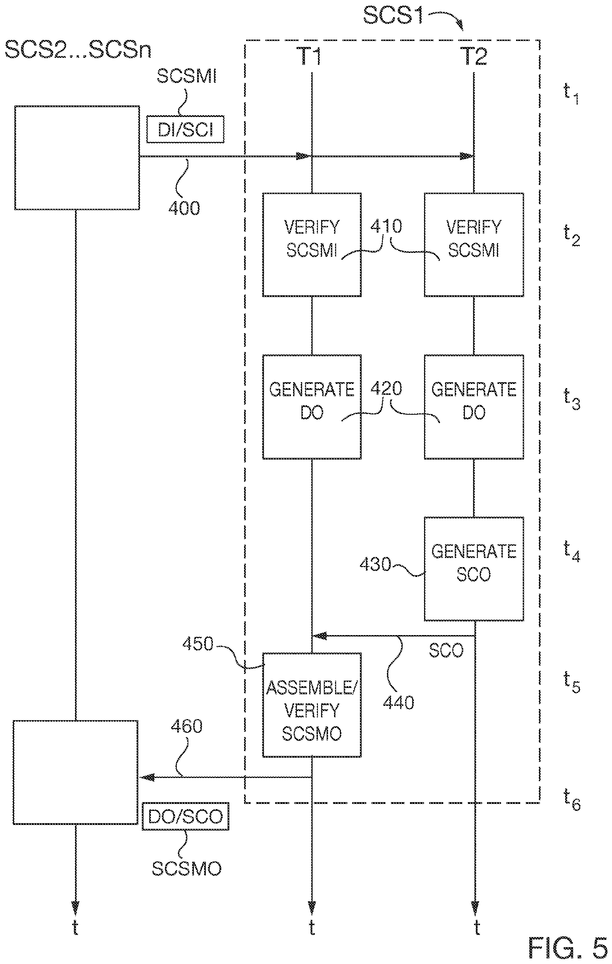

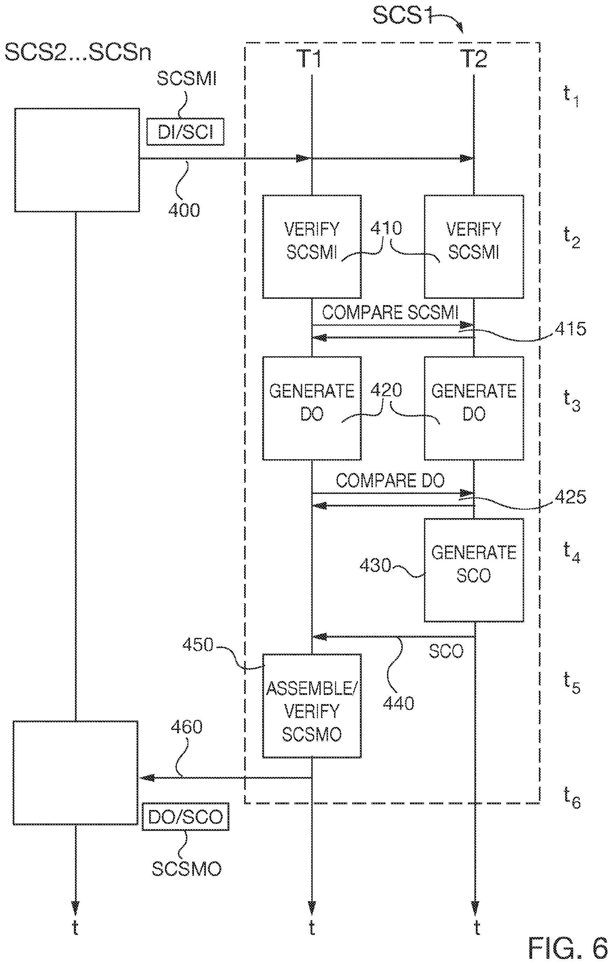

As can be understood by reference to FIGs. 5 and 6, the respective T1 task 300 and T2 Task 320 in SCS1 are in a mutually dependent, paired relationship with asymmetric communications implementations. The first T1 task 300 is capable of receiving a SCSMI and sending a responsive SCSMO, but it cannot create the responsive message until it receives the SCO from the second T2 task 320. The T2 task is not capable of external communication to the critical system data bus 92, and must rely on the T1 task to send any messages.

In FIG. 5, one of the safety critical systems SCS2-SCSn is sending a SCSMI in step 400, comprising a DI and an SCI to SCS1 at time t₁, where it is received by both T1 and T2. At t₂, both T1 and T2 verify the SCSMI data integrity in step 410 and in step 420 both generate DO data (t₃) in response to the input data DI. In step 430 T2 generates the output security code SCO at time t₄ and sends it to T1 in step 440. In step 450 (t₅), T1 now assembles and optionally verifies the DO (provided by T2 in the prior step)with its own generated DO before transmitting the SCSMO through critical systems data bus 92 in step 460 (t₆) to other safety critical systems. If the DO do not corroborate each other during step 450 (i.e., output data is suspect) it will not transmit the SCSMO. Alternatively, if T1 is not enabled to verify the DO or if T1 and /or T2 are malfunctioning, it may transmit a corrupted SCSMO, but the corruption will be identified when the message is received by another safety critical system.

The embodiment of FIG. 6 has all of the steps and processes as the embodiment of FIG. 5, but adds a compare SCSMI verification step 415, where T1 and T2 check each other's respective verification results. If the compared results are not the same SCS1 flags a fault. This embodiment also adds a compare output data DO step 425 before T2 generates the security output code SCO in step 430. Again, if the compared results are not the same SCS1 flags a fault.

The software redundancy and mutually dependent asymmetric communication output security code generation/transmission features of the present invention railway control system for safety critical systems assures a higher safety level than any individual or independently parallel processing pair of commercial off-the-shelf controllers or personal computers. A single computer is susceptible to multiple forms of failure that would not necessarily be detected by other safety critical systems receiving SCSMOs from the failing computer. Two independent, parallel task executions T1 and T2, whether implemented on one or multiple computer platforms, feeding identical SCSMOs to other safety critical systems or that corroborate output messages prior to transmission can both be generating identical incorrect output messages. Such failure mode transmission errors are not possible with the control system of the present invention.

When analyzing possible failure modes of the safety critical systems control system of the present invention SCS1, if T1 calculates an incorrect DO and T2 calculates a correct DO and SCO, then during verification step 450 T1 will flag a mismatch between its own DO and the DO and flag an error. If T1 does not verify the SCSMO in step 450 other safety critical systems receiving that message will flag the error when they verify the received message. Conversely if the T1 DO is correct but either the T2 DO or SCO are incorrect, T2 or other SCS receiving the SCSMO will identify the error. If both T1 and T2 malfunction and generate faulty DO and/or SCO the mismatch of the DO and SCO will be noted by other critical systems that subsequently receive the corrupted message.

Although various embodiments, which incorporate the teachings of the present invention, have been shown and described in detail herein, those skilled in the art can readily devise many other varied embodiments that still incorporate these teachings.

## Claims

1. A control system for a railway safety critical application system, comprising:
at least one controller, which comprises a computer processor and is configured to execute first and second tasks;
the first task capable of being in bilateral communication with the second task and capable of sending and receiving a safety critical systems message within a railway safety critical application system, the message including a security code and safety critical data;
the second task capable of being in bilateral communication with the first task and capable of receiving a safety critical systems message, but incapable of sending the safety critical systems message to the railway safety critical application system, the second task having a security code generator;
the control system further comprising an inter-task communications pathway coupling the first and second tasks;
wherein the first and second tasks are each configured to
receive a common input safety critical systems message including input safety critical systems data and an input security code,
independently verify the input message integrity and
independently generate output safety critical systems data,
the second task is configured to generate an output security code and to send it to the first task, and
the first task is configured to assemble and send an output safety critical systems message including the output safety critical systems data and the second task output security code for use within the railway safety critical application system,
**characterized by** said computer processor being configured to execute said first task and said second task simultaneously, virtually and in real time in said computer processor.

2. The system of claim 1, wherein the first and second tasks compare their respective input message integrity verifications prior to generating respective output safety critical systems data.

3. The system of claim 2, wherein the first and second tasks compare their respective output safety critical systems data, in particular prior to generation of the output security code.

4. The system of claim 1, wherein the first task verifies output safety critical systems data integrity before sending the output safety critical systems message.

5. The system of claim 1, wherein the first and second tasks are executed on at least one personal computer, the tasks further executed by at least one of different operating systems or software instruction sets.

6. A railway safety critical application system comprising a control system according to claim 1 or 5.

7. A railway system comprising: a plurality of control systems according to any of claims 1 to 5.

8. The railway system of claim 7, wherein the first and second tasks compare their respective input message integrity verifications prior to generating respective output safety critical systems data.

9. The railway system of claim 8, wherein the first and second tasks compare their respective output safety critical systems data prior, in particular to generation of the output security code.

10. The railway system of claim 7, wherein the first task verifies output safety critical systems data integrity before sending the output safety critical systems message.

11. The railway system of claim 7, wherein within each respective control system the first and second tasks are executed on at least one personal computer, the tasks further executed by at least one of different operating systems or software instruction sets, in particular wherein each respective control system the first and second tasks are executed on computers have different hardware construction and different operating systems.

12. A method for controlling a railway safety critical application control system, comprising:
receiving with respective first and second tasks that are executed on at least one controller, which comprises a computer processor, a safety critical systems input message that is generated within a railway safety critical application system that includes a security code and safety critical data, and independently verifying the input message integrity;
independently generating output safety critical systems data in response to the input message with the respective first and second tasks;
generating an output security code only with the second task and sending the generated output security code to the first task; and
assembling and sending an output safety critical systems message including the output safety critical systems data and second task output security code with the first task.
wherein said first task and said second task being executed simultaneously, virtually and in real time on the computer processor.

13. The method of claim 12, further comprising comparing first and second tasks respective input message integrity verifications prior to generating respective output safety critical systems data.

14. The method of claim 13, further comprising comparing first and second tasks respective output safety critical systems data, in particular prior to generating the output security code.

## Patentansprüche

1. Steuersystem für ein sicherheitskritisches Eisenbahn-Anwendungssystem, das Folgendes umfasst:
mindestens eine Steuereinrichtung, die einen Computerprozessor umfasst und konfiguriert ist, eine erste und eine zweite Task auszuführen;
wobei die erste Task in der Lage ist, sich in bilateraler Kommunikation mit der zweiten Task zu befinden, und in der Lage ist, eine sicherheitskritische Systemnachricht in einem sicherheitskritischen Eisenbahn-Anwendungssystem zu senden und zu empfangen, wobei die Nachricht einen Sicherheitscode und sicherheitskritische Daten enthält;
wobei die zweite Task in der Lage ist, sich in bilateraler Kommunikation mit der ersten Task zu befinden, und in der Lage ist, eine sicherheitskritische Systemnachricht zu empfangen, aber nicht in der Lage ist, die sicherheitskritische Systemnachricht zu dem sicherheitskritischen Eisenbahn-Anwendungssystem zu senden, wobei die zweite Task einen Sicherheitscode-Generator aufweist;
wobei das Steuersystem ferner einen Inter-Task-Kommunikationspfad umfasst, der die erste und die zweite Task koppelt;
wobei die erste und die zweite Task jeweils konfiguriert sind,
eine gemeinsame sicherheitskritische Systemeingangsnachricht zu empfangen, die sicherheitskritische Systemeingangsdaten und einen Eingangssicherheitscode enthalten,
die Integrität der Eingangsnachricht unabhängig zu verifizieren, und
sicherheitskritische Systemausgangsdaten unabhängig zu erzeugen,
wobei die zweite Task konfiguriert ist, einen Ausgangssicherheitscode zu erzeugen und diesen zu der ersten Task zu senden, und
die erste Task konfiguriert ist, eine sicherheitskritische Systemausgangsnachricht, die die sicherheitskritischen Systemausgangsdaten und den Ausgangssicherheitscode der zweiten Tasks enthält, zusammenzusetzen und zu senden, zur Verwendung in dem sicherheitskritischen Eisenbahn-Anwendungssystem,
**dadurch gekennzeichnet, dass** der Computerprozessor konfiguriert ist, die erste Task und die zweite Task gleichzeitig, virtuell und in Echtzeit in dem Computerprozessor auszuführen.

2. System nach Anspruch 1, wobei die erste und die zweite Task vor dem Erzeugen der jeweiligen sicherheitskritischen Systemausgangsdaten ihre jeweiligen Eingangsnachricht-Integritätsverifizierungen vergleichen.

3. System nach Anspruch 2, wobei die erste und die zweite Task insbesondere vor der Erzeugung des Ausgangssicherheitscodes ihre jeweiligen sicherheitskritischen Systemausgangsdaten vergleichen.

4. System nach Anspruch 1, wobei die erste Task die Integrität der sicherheitskritischen Systemausgangsdaten vor dem Senden der sicherheitskritischen Systemausgangsnachricht verifizieren.

5. System nach Anspruch 1, wobei die erste und die zweite Task auf mindestens einem Personal-Computer ausgeführt werden, wobei die Tasks ferner durch verschiedene Betriebssysteme und/oder Software-Anweisungssätze ausgeführt werden.

6. Sicherheitskritisches Eisenbahn-Anwendungssystem, das ein Steuersystem nach Anspruch 1 oder 5 umfasst.

7. Eisenbahnsystem, das Folgendes umfasst:
mehrere Steuersysteme nach einem der Ansprüche 1 bis 5.

8. Eisenbahnsystem nach Anspruch 7, wobei die erste und die zweite Task vor dem Erzeugen der jeweiligen sicherheitskritischen Systemausgangsdaten ihre jeweiligen Integritätsverifizierungen der Eingangsnachrichten vergleichen.

9. Eisenbahnsystem nach Anspruch 8, wobei die erste und die zweite Task insbesondere vor der Erzeugung des Ausgangssicherheitscodes ihre jeweiligen sicherheitskritischen Systemausgangsdaten vergleichen.

10. Eisenbahnsystem nach Anspruch 7, wobei die erste Task vor dem Senden der sicherheitskritischen Systemausgangsnachricht die Integrität der sicherheitskritischen Systemausgangsdaten verifiziert.

11. Eisenbahnsystem nach Anspruch 7, wobei in jedem entsprechenden Steuersystem die erste und die zweite Task auf mindestens einem Personal-Computer ausgeführt werden, wobei die Tasks ferner durch unterschiedliche Betriebssysteme und/oder Software-Anweisungssätze ausgeführt werden, insbesondere wobei jedes entsprechende Steuersystem die erste und die zweite Task auf Computern ausgeführt werden unterschiedliche Hardware-Konstruktion und unterschiedliche Betriebssysteme aufweisen.

12. Verfahren zum Steuern eines sicherheitskritischen Eisenbahn-Anwendungssystems, das Folgendes umfasst:
Empfangen einer sicherheitskritischen Systemeingangsnachricht, die in einem sicherheitskritischen Eisenbahn-Anwendungssystem erzeugt wird, die einen Sicherheitscode und sicherheitskritische Daten enthält, mit entsprechender erster und zweiter Task, die auf der mindestens einen Steuereinrichtung, die einen Computerprozessor umfasst, ausgeführt werden, und unabhängiges Verifizieren der Integrität der Eingangsnachricht;
als Reaktion auf die Eingangsnachricht unabhängiges Erzeugen von sicherheitskritischen Systemausgangsdaten mit der jeweiligen ersten und zweiten Task;
Erzeugen eines Ausgangssicherheitscodes nur mit der zweiten Task und Senden des erzeugten Ausgangssicherheitscodes zu der ersten Task; und
Zusammensetzen und Senden einer sicherheitskritischen Systemausgangsnachricht, die die sicherheitskritischen Systemausgangsdaten und den Sicherheitscode des zweite Tasks enthält, mit der ersten Task,
wobei die erste Task und die zweite Task gleichzeitig, virtuell und in Echtzeit auf dem Computerprozessor ausgeführt werden.

13. Verfahren nach Anspruch 12, das ferner das Vergleichen der jeweiligen Integritätsverifizierungen der Eingangsnachrichten der ersten und zweiten Task vor dem Erzeugen des jeweiligen sicherheitskritischen Systemausgangsdaten umfasst.

14. Verfahren nach Anspruch 13, das ferner das Vergleichen der jeweiligen sicherheitskritischen Systemausgangsdaten der ersten und zweiten Task insbesondere vor dem Erzeugen des Ausgangssicherheitscodes umfasst.

## Revendications

1. Système de commande pour un système d'application critique de sécurité ferroviaire, comprenant :
au moins un dispositif de commande, qui comprend un processeur d'ordinateur et est configuré pour exécuter des première et seconde tâches ;
la première tâche étant capable d'être en communication bilatérale avec la seconde tâche et capable d'envoyer et de recevoir un message de systèmes critiques de sécurité à l'intérieur d'un système d'application critique de sécurité ferroviaire, le message incluant un code de sécurité et des données critiques de sécurité ;
la seconde tâche étant capable d'être en communication bilatérale avec la première tâche et capable de recevoir un message de systèmes critiques de sécurité, mais incapable d'envoyer le message de systèmes critiques de sécurité au système d'application critique de sécurité ferroviaire, la seconde tâche ayant un générateur de code de sécurité ;
le système de commande comprenant en outre une voie de communications inter-tâche couplant les première et seconde tâches ;
dans lequel les première et seconde tâches sont chacune configurée pour
recevoir un message d'entrée commun de systèmes critiques de sécurité incluant des données de systèmes critiques de sécurité d'entrée et un code de sécurité d'entrée, indépendamment vérifier l'intégrité de message d'entrée et indépendamment générer des données de systèmes critiques de sécurité de sortie,
la seconde tâche est configurée pour générer un code de sécurité de sortie et pour l'envoyer à la première tâche, et
la première tâche est configurée pour assembler et envoyer un message de systèmes critiques de sécurité de sortie incluant les données de systèmes critiques de sécurité de sortie et le code de sécurité de sortie de seconde tâche pour l'utilisation à l'intérieur du système d'application critique de sécurité ferroviaire,
**caractérisé en ce que** ledit processeur d'ordinateur est configuré pour exécuter ladite première tâche et ladite seconde tâche simultanément, virtuellement et en temps réel dans ledit processeur d'ordinateur.

2. Système selon la revendication 1, dans lequel les première et seconde tâches comparent leurs vérifications d'intégrité de message d'entrée respectives avant de générer des données de systèmes critiques de sécurité de sortie respectives.

3. Système selon la revendication 2, dans lequel les première et seconde tâches comparent leurs données de systèmes critiques de sécurité de sortie respectives, en particulier avant la génération du code de sécurité de sortie.

4. Système selon la revendication 1, dans lequel la première tâche vérifie une intégrité de données de systèmes critiques de sécurité de sortie avant d'envoyer le message de systèmes critiques de sécurité de sortie.

5. Système selon la revendication 1, dans lequel les première et seconde tâches sont exécutées sur au moins un ordinateur personnel, les tâches étant en outre exécutées par au moins un de différents systèmes d'exploitation ou ensembles d'instructions logicielles.

6. Système d'application critique de sécurité ferroviaire, comprenant un système de commande selon la revendication 1 ou 5.

7. Système ferroviaire, comprenant :
une pluralité de systèmes de commande selon l'une quelconque des revendications 1 à 5.

8. Système ferroviaire selon la revendication 7, dans lequel les première et seconde tâches comparent leurs vérifications d'intégrité de message d'entrée respectives avant de générer des données de systèmes critiques de sécurité de sortie respectives.

9. Système ferroviaire selon la revendication 8, dans lequel les première et seconde tâches comparent leurs données de systèmes critiques de sécurité de sortie respectives avant, en particulier, la génération du code de sécurité de sortie.

10. Système ferroviaire selon la revendication 7, dans lequel la première tâche vérifie l'intégrité de données de systèmes critiques de sécurité de sortie avant d'envoyer le message de systèmes critiques de sécurité de sortie.

11. Système ferroviaire selon la revendication 7, dans lequel, à l'intérieur de chaque système de commande respectif, les première et seconde tâches sont exécutées sur au moins un ordinateur personnel, les tâches étant en outre exécutées par au moins un de différents systèmes d'exploitation ou ensembles d'instructions logicielles, en particulier dans lequel chaque système de commande respectif les première et seconde tâches sont exécutées sur des ordinateurs ont une différente construction de matériel et différents systèmes d'exploitation.

12. Procédé pour commander un système de commande d'application critique de sécurité ferroviaire, comprenant :
la réception, avec des première et seconde tâches respectives qui sont exécutées sur au moins un dispositif de commande, qui comprend un processeur d'ordinateur, d'un message d'entrée de systèmes critiques de sécurité qui est généré à l'intérieur d'un système d'application critique de sécurité ferroviaire qui inclut un code de sécurité et des données critiques de sécurité, et la vérification indépendante de l'intégrité de message d'entrée ;
la génération indépendante de données de systèmes critiques de sécurité de sortie en réponse au message d'entrée avec les première et seconde tâches respectives ;
la génération d'un code de sécurité de sortie seulement avec la seconde tâche et l'envoi du code de sécurité de sortie généré à la première tâche ; et
l'assemblage et l'envoi d'un message de systèmes critiques de sécurité de sortie incluant les données de systèmes critiques de sécurité de sortie et le code de sécurité de sortie de seconde tâche avec la première tâche,
dans lequel ladite première tâche et ladite seconde tâche sont exécutées simultanément, virtuellement et en temps réel sur le processeur d'ordinateur.

13. Procédé selon la revendication 12, comprenant en outre la comparaison de première et seconde tâches vérifications d'intégrité de message d'entrée respectives avant la génération de données de systèmes critiques de sécurité de sortie respectives.

14. Procédé selon la revendication 13, comprenant en outre la comparaison de première et seconde tâches données de systèmes critiques de sécurité de sortie respectives, en particulier avant la génération du code de sécurité de sortie.
